# EUROPÄISCHE PATENTSCHRIFT

(11) **EP 2 178 982 B1**
(45) Veröffentlichungstag und Bekanntmachung des Hinweises auf die Patenterteilung: **12.10.2011**
(21) Anmeldenummer: 08774869.5
(22) Anmeldetag: 08.07.2008
(51) Int. Cl.: C08L 83/04, C09D 183/04

(54) **ANORGANISCH-MODIFIZIERTE POLYESTERBINDEMITTELZUBEREITUNG, VERFAHREN ZUR HERSTELLUNG UND IHRE VERWENDUNG**
INORGANICALLY MODIFIED POLYESTER BINDER PREPARATION, PROCESS FOR PRODUCTION THEREOF AND USE THEREOF
PRÉPARATION DE LIANT POLYESTER À MODIFICATION MINÉRALE, PROCÉDÉS POUR SA FABRICATION, ET UTILISATION DE CETTE PRÉPARATION

(30) Priorität: 14.08.2007 DE 102007038313
(43) Veröffentlichungstag der Anmeldung: 28.04.2010
(73) Patentinhaber: Evonik Degussa GmbH, 45128 Essen (DE)
(72) Erfinder: KOSCHABEK, René, 68259 Mannheim (DE); BARTMANN, Martin, 45657 Recklinghausen (DE); BRAND, Thorsten, 45772 Marl (DE); STANDKE, Burkhard, 79540 Lörrach (DE); EDELMANN, Roland, 79618 Rheinfelden (DE); WASSMER, Christian, 79688 Hausen (DE)
(86) Internationale Anmeldenummer: PCT/EP2008/058823
(87) Internationale Veröffentlichungsnummer: WO 2009/021779

(56) Entgegenhaltungen:
- WO-A-02/100151
- US-A- 6 140 419

## Beschreibung

Die vorliegende Erfindung betrifft eine Zubereitung umfassend mindestens eine spezifische oligomere Siloxan-Komponente und mindestens eine hydroxylgruppenhaltige Polymer-Komponente, Verfahren zu ihrer Herstellung sowie deren Verwendung in Formulierungen, insbesondere Metallbeschichtungsformulierungen.

Bandbeschichtungen sind kontinuierliche Beschichtungen von kaltgewalztem, meist verzinkten Bändern aus Stahl oder aus Aluminium. Unter konstanten und reproduzierbaren Bedingungen entstehen lackierte Metallbänder, die in der Industrie als Werkstoffe mit bereits beschichteter Oberfläche eingesetzt werden können. Diese finden z.B. Anwendung im:
- Bauwesen (Fassadenelemente, Lärmschutzwände, Jalousien, Dachziegel)
- Transportwesen (Wohnmobile, Container, Straßenschilder, LKW-Aufbauten)
- Haushaltsgeräten (Waschmaschinen, Kühlschränke, Herde)
- Metallverpackungen (Dosen, Tuben)

Wichtige Eigenschaften für derartige Beschichtungen sind Wetter-, Hydrolyse-, Chemikalien- und Kratzbeständigkeit, hoher Glanz, Korrosionsschutz, Härte und Flexibilität, sowie eine hohe Substrathaftung. Letztere beiden Eigenschaften sind für Metallbeschichtungen von inhärenter Bedeutung, weil die Metallsubstrate nach der Beschichtung einem oder mehreren Verformungsschritten ausgesetzt werden, wie das für viele Bauteile vonnöten ist.

In der Metallbeschichtungsindustrie finden bevorzugt organische Bindemittel auf Polyesterbasis Verwendung (ECCA Statistics 2004), welche mittels vollständig, teilweise oder nicht alkylierter Melaminverbindungen und deren Derivaten, Benzoguanaminen oder Harnstoffen, weniger bevorzugt durch blockierte Polyisocyanate vernetzt werden. Diese geläufigen Beschichtungen zeichnen sich vor allem durch gute Flexibilität aus. Nachteile haben diese Beschichtungen vor allem hinsichtlich Substrathaftung, Chemikalienbeständigkeit und Kratzfestigkeit.

Es ist des Weiteren bekannt, dass sich rein anorganische Beschichtungssysteme auf Siloxanbasis, die durch Umsetzung von hydrolysierbaren Silangruppen mit Wasser oder Wasser abspaltenden Mitteln hergestellt wurden, durch eine hohe Kratzfestigkeit und Chemikalienbeständigkeit auszeichnen.

Ein allgemein bekanntes Verfahren zur Herstellung solcher rein anorganischen Beschichtungen ist der Sol-Gel-Prozess, wie er von C. J. Brinker und G. W. Scherer in Sol-Gel Science: The Physics and Chemistry of Sol-Gel Processing, Academic Press, New York (1990) ausführlich beschrieben wird.
Solche überwiegend anorganischen Sol-Gel-Beschichtungen sind für viele Metallbeschichtungen zu spröde und neigen bei dreidimensionaler Verformung der Bleche zu Spannungsrissen. Neben damit verbundenen ästhetischen Mängeln kann durch derartige Risse Feuchtigkeit unter die Beschichtung dringen, die dann korrosive Prozesse auf dem Blech in Gang setzt.

Kombinationen von anorganischen und organischen Bindemitteln, so genannte Hybridlacke, sind Stand der Technik. Beispielsweise beschreibt EP 1006131 eine Zubereitung für anspruchsvolle Beschichtungen, wie beispielsweise im Automobilbereich, die auf Addukten von aliphatischen Polyisocyanaten und Aminosilanen basiert.

EP 1310534 beschreibt eine Zubereitung unter Verwendung monomerer Silane, die als Additive auch gemeinsam mit Epoxiaddukten der Phosphorsäure in die Lackformulierung gegeben werden.

WO 02/100151 A (ADSIL LC [US]) 19. Dezember 2002 (2002-12-19) definiert ein Hydrolyseprodukt aus Epoxysilanen, erwähnt aber kein weiteres hydroxylgruppenhaltiges Polymer.

US 6 140 419 A (BARGLIK-CHORY CHRISTINE [DE] ET AL) 31. Oktober 2000 (2000-10-31) offenbart eine Zubereitung, die das Hydrolyseprodukt von GLYMO und Diphenyldimethoxysilan enthält und als weiteres Polymer Acrylat.

Aufgabe der Erfindung war es, eine Zubereitung bereitzustellen, die bei Anwendung in entsprechenden Formulierungen, insbesondere in Metallbeschichtungen, eine verbesserte Substrathaftung aufweist und gleichzeitig flexibel ist.

Überraschenderweise wurde nun gefunden, dass eine erfindungsgemäße Zubereitung eine verbesserte Balance zwischen hoher Härte, Substrathaftung und Flexibilität bietet und hinsichtlich Flexibilität sogar besser ist als rein organische Polyestermetallbeschichtungen.

Gegenstand der vorliegenden Erfindung ist demgemäß eine Zubereitung mindestens umfassend mindestens eine oligomere Siloxan-Komponente und mindestens eine Polymer-Komponente, dadurch gekennzeichnet, dass die oligomere Siloxan-Komponente erhältlich ist durch kontrollierte Hydrolyse und Kondensation mindestens eines Epoxy-funktionellen Silans der allgemeinen Formel I

R¹-SiR'ₘ(OR)₃₋ₘ (I),

worin R¹ für eine Gruppe 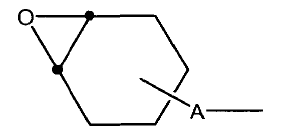 oder 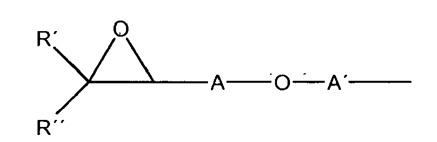 steht und die Gruppen R, R' sowie R" gleich oder verschieden sind und jeweils für einen Wasserstoff (H) oder für eine lineare, verzweigte oder cyclische, gegebenenfalls substituierte Alkylgruppe mit 1 bis 6 C-Atomen stehen, vorzugsweise H, Methyl, Ethyl, n-Propyl, n-Butyl, die Gruppen A und A' gleich oder verschieden sind und jeweils für eine bivalente Alkylgruppe mit 1 bis 10 C-Atomen stehen, vorzugsweise -(CH₂)₂- , - (CH₂)₂-, -(CH₂)₃-, -(CH₂)(CH)(CH₃₎(CH₂₎- für A' sowie -(CH₂)- für A und m gleich 0 oder 1 ist in Gegenwart von Borsäure [H₃BO₃ bzw. B(OH)₃].

Üblicherweise wird bei der Herstellung von Sol-Gel-Systemen das Wasser meist im Überschuss eingesetzt. Ziel ist dabei, eine möglichst vollständige Hydrolyse zu erreichen. Viele Silane hydrolysieren unter diesen Bedingungen leider nicht vollständig. Beispielsweise verbleibt bei der Hydrolyse von 3-Glycidyloxypropyltrimethoxysilan auch bei einer hohen Konzentration an sauren Katalysatoren, wie HCl oder Essigsäure, auch nach Stunden und auch nach Hydrolyse bei erhöhter Temperatur ein Monomeranteil von ca. 90 % (Flächenprozent GC WLD).
Hierzu wurde in einer Parallelanmeldung eine neue Methode bereitgestellt, die es erlaubt, Epoxy-funktionelle Silane, insbesondere 3-Glycidyloxypropylalkoxysilane als solche oder entsprechende 3- Glycidyloxypropylalkoxysilan enthaltende Gemische von Organoalkoxysilanen, mit einer unterstöchiometrischen Menge an Wasser sicher und möglichst vollständig unter Einsatz von Borsäure zu hydrolysieren und zumindest anteilig zu kondensieren.

Das verwendete Siloxan-Oligomer kovernetzt bei der thermischen Aushärtung der Beschichtung mit beispielsweise einem organischen Polyester-Polyol und kann durch weitere funktionelle Gruppen zur besseren Substrathaftung beitragen.
Die Siloxan-Oligomere werden durch kontrollierte Hydrolyse und Kondensation mindestens eines Epoxy-funktionellen Silans der allgemeinen Formel I

R¹-SiR'ₘ(OR)₃₋ₘ (I),

worin R¹ für eine Gruppe 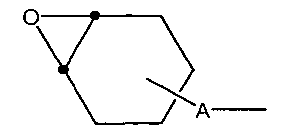 oder 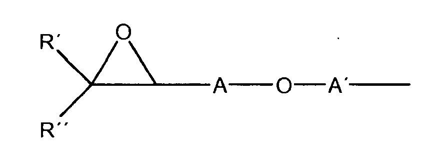 steht und die Gruppen R, R' sowie R" gleich oder verschieden sind und jeweils für einen Wasserstoff (H) oder für eine lineare, verzweigte oder cyclische, gegebenenfalls substituierte Alkylgruppe mit 1 bis 6 C-Atomen stehen, vorzugsweise H, Methyl, Ethyl, n-Propyl, n-Butyl, Gruppen A und A' gleich oder verschieden sind und jeweils für eine bivalente Alkylgruppe mit 1 bis 10 C-Atomen stehen, vorzugsweise -(CH₂)₂-, -(CH₂)₂-, - (CH₂)₃-, -(CH₂)(CH)(CH₃)(CH₂)- für A' sowie -(CH₂)- für A und m gleich 0 oder 1 ist, in Gegenwart von Borsäure hergestellt.

Bei der Hydrolyse und Kondensation kann zusätzlich mindestens ein weiteres organofunktionelles Silan der allgemeinen Formen II

R²-SiR'ₙ(OR)₃₋ₙ (II)

worin R² eine lineare, verzweigte oder cyclische, gegebenenfalls substituierte Alkylgruppe mit 1 bis 20 C-Atomen darstellt, beispielsweise substituiert mit N-, O-, S-, Halogen-tragenden Gruppen, wie Fluoralkyl, Aminoalkyl, Mercaptoalkyl, Methacryloxyalkyl oder OR, d.h. OH oder Alkoxy, insbesondere Methoxy oder Ethoxy, worin R' Methyl bedeutet, Gruppen R unabhängig für einen Wasserstoff oder für eine lineare, verzweigte oder cyclische Alkylgruppe mit 1 bis 6 C-Atomen stehen und n gleich 0 oder 1 ist, anwesend sein. Gemäß Formel II kann man beim erfindungsgemäßen Verfahren vorteilhaft Methoxy- oder Ethoxysilane verwenden, die insbesondere eine funktionelle Gruppe R² aus der Reihe Methoxy, Ethoxy, Methyl, Ethyl, n-Propyl, i-Propyl, n-Butyl, n-Octyl, i-Octyl, Tridecafluor-1,1,2,2-tetrahydroctyl - um nur einige Beispiele zu nennen - tragen, beispielsweise - aber nicht ausschließlich - Methyltrimethoxysilan, Methyltriethoxysilan, Vinyltrimethoxysilan, Vinyltriethoxysilan, n-Propyltrimethoxysilan, n-Propyltriethoxysilan, n-Octyltrimethoxysilan, n-Octyltriethoxysilan, Hexadecyltrimethoxysilan, Hexadecyltriethoxysilan, Tridecafluor-1,1,2,2-tetrahydrooctyltrimethoxysilan, Tridecafluor-1,1,2,2-tetrahydrooctyltriethoxysilan, Methacryloxypropyltrimethoxysilan, Methacryloxypropyltriethoxysilan, Mercaptopropyltrimethoxysilan, Mercaptopropyltriethoxysilan, Tetramethoxysilan, Tetraethoxysilan.

Bei der Herstellung der Siloxan-Komponente werden pro Mol Alkoxyfunktion der eingesetzten Silane 0,001 bis ≤ 5 Mol Wasser eingesetzt, neben Borsäure als Hydrolysekatalysator und Kondensationskomponente wird kein weiterer Hydrolyse- bzw. Kondensationskatalysator verwendet und die bei der Umsetzung gebildeten Kondensate basieren auf Si-O-B und/oder Si-O-Si-Bindungen.

Bevorzugt verwendet man bei der erfindungsgemäßen Umsetzung pro Mol eingesetzter Alkoxyfunktion gemäß Formel I und/oder II 0,05 bis 5 besonders bevorzugt 0,1 bis 2, ganz besonders bevorzugt 0,15 bis 1, insbesondere alle numerischen Zwischenwerte zwischen 0,15 bis 1 Mol, beispielsweise aber nicht ausschließlich 0,2, 0,3, 0,4, 0,5, 0,6, 0,7, 0,8, 0,9, Wasser.

Ferner bevorzugt man beim erfindungsgemäßen Verfahren pro Mol eingesetztes Silan 0,001 bis 1 Mol Bor, besonders vorzugsweise 0,01 bis 0,5, insbesondere 0,07 bis 0,76 Mol Bor, das vorteilhaft in Form von Borsäure [H₃BO₃ bzw. B(OH)₃] eingestellt wird.

Auch führt man beim erfindungsgemäßen Verfahren die Umsetzung vorteilhaft bei einer Temperatur im Bereich von 0 bis 200 °C, bevorzugt bei 40 bis 150 °C, besonders bevorzugt von 50 bis 100 °C, ganz besonders bevorzugt 60 bis 80 °C, durch.

So führt man die erfindungsgemäße Umsetzung insbesondere unter guter Durchmischung über 0,1 bis 100 h, bevorzugt 0,5 bis 20 h, besonders bevorzugt 1 bis 10 h, ganz besonders bevorzugt über 2 bis 6 h durch.

Ebenfalls kann man bei dem genannten Verfahren vorteilhaft aus dem so erhaltenen Produktgemisch den darin vorliegenden Alkohol und/oder Borsäureester in einer konventionellen Destillation unter vermindertem Druck zumindest anteilig entfernen. Man kann solche Bestandteile aber auch mittels Kurzweg- bzw. Dünnschichtverdampfer aus dem Produkt entfernen.

Darüber hinaus kann man so erhaltene Produkte - falls erforderlich - filtrieren oder zentrifugieren, um Schwebpartikel abzutrennen. Dazu kann man beispielsweise einen Filter oder eine Zentrifuge verwenden.

Insbesondere bevorzugt ist das Glycidylpropylalkoxysilan der allgemeinen Formel I Glycidyloxypropyltrimethoxy- oder ethoxysilan.

Beispielsweise kann man vorteilhaft eine praktisch vollständige Hydrolyse von 3-Glycidyloxypropyltrimethoxysilan (GLYMO) mit einer Wassermenge von 0,05 bis 5, bevorzugt 0,1 bis 2, insbesondere 0,15 bis 1 mol Wasser pro mol eingesetzter Alkoxyfunktion unter Einsatz bzw. in Gegenwart von Borsäure durchführen. Insbesondere kann man innerhalb von nur 7 Stunden mittels Borsäure-katalyse so gut wie das komplette GLYMO zu oligomeren Produkten umsetzen. Eine praktisch vollständige Hydrolyse bedeutet in diesem Zusammenhang, dass weniger als 20 Gew.-% oder Flächen-% (GC-WLb-%) des ursprünglich eingesetzten monomeren Silans nach Ausführung der Hydrolyse im Reaktionsraum unhydrolysiert verbleiben. Die auf diese Weise erhaltenen Oligomere sind mindestens drei Monate lagerstabil und können beispielsweise vorteilhaft zur Bindemittelherstellung mit Polyesterpolyolen verwendet werden.

Die Reaktionskontrolle (Bestimmung der Konzentration an monomeren Silanen im Reaktionsgemisch) erfolgt bevorzugt über Standard Gaschromatografie (HP 5890 Series II, Wärmeleitfähigkeitsdetektor). Die Temperaturmessung kann konventionell über Thermoelemente erfolgen. Druckmessung erfolgt beispielsweise über Piezodruckaufnehmer (z. B. Vacubrand DVR 2). Der Restmonomergehalt in den Produkten kann zusätzlich über ²⁹Si NMR Spektroskopie überprüft werden und liegt vorteilhaft im Bereich von 5 bis 17 mol-%. Der Vernetzungsgrad des Produktes wird durch Bestimmung der M, D, T Struktureinheiten via ²⁹Si NMR Spektroskopie ermittelt. In den erfindungsgemäßen Silankondensaten liegt der Anteil an M-Struktureinheiten bevorzugt im Bereich von 14 bis 35 mol-%, der an D-Strukturen im Bereich von 36 bis 42 mol-% und der an T-Strukturen im Bereich von 15 bis 34 %. Die Hydro-Methanolyse der Epoxidgruppe kann via ¹³C NMR Spektroskopie bestimmt werden. Die erfindungsgemäßen Produktzusammensetzungen enthalten vorteilhaft nur einen Anteil von 3 bis 7 mol-% geöffnetes Epoxid bezogen auf den ursprünglich eingesetzten Epoxidanteil.

Bei der Polymerkomponente handelt es sich um hydroxylgruppenhaltige Polymere, ganz besonders bevorzugt um jene aus der Gruppe umfassend Polyester, Polycarbonatpolyole oder Polyetherpolyole. Insbesondere bevorzugt sind die hydroxylgruppenhaltigen Polyesters.

Die erfindungsgemäß bevorzugten Polyester werden nach bekannten Verfahren (siehe Dr. P. Oldring, Resins for Surface Coatings, Volume III, veröffentlicht von Sita Technology, 203 Gardiness House, Bromhill Road, London SW 184JQ, England 1987) durch Kondensation hergestellt.

Vorzugsweise weisen die Polyester eine Säurezahl zwischen 0 und 10 mg KOH/g, vorzugsweise 0,1 bis 5 mg KOH/g und besonders bevorzugt 0,1 bis 3 mg KOH/g, eine Hydroxylzahl zwischen 3 und 200 mg KOH/g, vorzugsweise 10 bis 80 mg KOH/g und besonders bevorzugt 15 bis 40 mg KOH/g, eine Glasübergangstemperatur (Tg) zwischen -50 °C und 110 °C, vorzugsweise zwischen -20 °C und +70 °C, ganz besonders bevorzugt zwischen -10 °C und +60 °C, eine lineare oder verzweigte Struktur, vorzugsweise linear oder schwach verzweigt, besonders bevorzugt linear und ein Molekulargewicht (Mn) zwischen 800 g/mol und 25000 g/mol, bevorzugt zwischen 1300 g/mol und 11000 g/mol und besonders bevorzugt zwischen 2000 g/mol und 7500 g/mol auf.

Die Säurezahl wird bestimmt nach DIN EN ISO 2114.
Unter der Säurezahl (SZ) versteht man diejenige Menge Kaliumhydroxid in mg, die zur Neutralisation der in einem Gramm Substanz enthaltenen Säuren erforderlich ist. Die zu untersuchende Probe wird in Dichlormethan gelöst und mit 0,1 N methanolischer Kalilauge gegen Phenolphthalein titriert.

Die Hydroxylzahl wird bestimmt nach DIN 53240-2.
Bei diesem Verfahren wird die Probe mit Essigsäureanhydrid in Gegenwart von 4-Dimethylaminopyridin als Katalysator umgesetzt, wobei die Hydroxylgruppen acetyliert werden. Dabei entsteht pro Hydroxylgruppe ein Molekül Essigsäure, während die anschließende Hydrolyse des überschüssigen Essigsäureanhydrids zwei Moleküle Essigsäure liefert. Der Verbrauch an Essigsäure wird titrimetrisch aus der Differenz zwischen Hauptwert und einem parallel durchzuführenden Blindwert ermittelt.

Die Glasübergangstemperatur T_{g} wird bestimmt mittels DSC (Differential Scanning Calorimetry) nach DIN EN ISO 11357-1 gemessen. Die angegebenen Werte werden einem zweiten Aufheizzyklus entnommen.

Das Molekulargewicht wird bestimmt mittels Gelpermeationschromatographie (GPC). Charakterisierung der Proben erfolgte in Tetrahydrofuran als Eluent nach DIN 55672-1. Mₙ (UV) = Zahlenmittleres Molgewicht (GPC, UV-Detektion), Angabe in g / mol M_{w} (UV) = Massenmittleres Molgewicht (GPC, UV-Detektion), Angabe in g / mol

Die eingesetzte Polyester-Komponente umfasst vorzugsweise Copolyester, insbesondere aus einem Di- und/oder (Poly-)Carbonsäuregemisch und einem Di- oder (Poly-)Alkoholgemisch.

Der Anteil der Polyester-Komponente in der Zubereitung beträgt 20 bis 95 Gew.-%, bezogen auf die Zubereitung, insbesondere 55 bis 75 Gew.-%.
Im einzelnen können übliche Carbonsäuren und deren veresterbare Derivate verwendet werden, das heißt die Säurekomponente des Copolyesters umfasst beispielsweise Phthalsäure, Isophthalsäure, Terephthalsäure, 1,2-, 1,3-, 1,4-Cyclohexandicarbonsäure, Bernsteinsäure, Adipin-, Azelain-, Sebazin-, Undecandi-, Dodecandi-, Tetradecandi-, Octadecandisäure, Methyltetra-, Methylhexahydrophthalsäure, Pyromellitsäure, Dimerfettsäuren, und/oder Trimellitsäure, deren Säureanhydride und/oder niedrige Alkylester wie z. B. Methylester, sowie Mischungen hieraus. Bevorzugt eingesetzt werden Isophthalsäure, Terephthalsäure, Adipinsäure, Sebazinsäure, 1,2-Cyclohexandicarbonsäure, Trimellitsäure, deren Säureanhydride und/oder veresterbare Derivate.

Als Alkoholkomponenten des Copolyesters werden beispielsweise. Ethylenglykol, 1,2-und/oder 1,3-Propandiol, Diethylen-, Dipropylen-, Triethylen-, Tetraethylenglykol, 1,4-Butandiol, 2,2'-Butylethyl-1,3-propandiol, 2-Methyl-1,3-propandiol, 1,5-Pentandiol, Cyclohexandimethanol, Glycerin, 1,6-Hexandiol, 2,2'-Dimethyl-1,3-propandiol, Trimethylolethan, Trimethylolpropan, 1,4-Benzyldimethanol, und -ethanol, 2,4-Dimethyl-2-ethylhexan-1,3-diol, 1,2,6-Hexantriol, Dicidol sowie Mischungen hieraus eingesetzt.. Bevorzugt eingesetzt werden 2-Methyl-1,3-propandiol, 2,2'-Dimethyl-1,3-propandiol, Ethylenglykol und Trimethylolpropan.

Ebenfalls Gegenstand der vorliegenden Erfindung sind Verfahren zur Herstellung der erfindungsgemäßen Zubereitung. In der einfachsten Ausführungsform umfasst das erfindungsgemäße Herstellverfahren das Mischen mindestens einer oligomeren Siloxan-Komponente und mindestens einer Polymer-Komponente, bevorzugt einer Polyester-Komponente. Das Mischen der Komponenten kann dabei bei Temperaturen von 0 bis 150 °C, vorzugsweise bei Temperaturen von 20 bis 100 °C erfolgen. In einer weiteren Ausführungsform kann das Mischen in Gegenwart eines Lösungsmittels erfolgen. Das Lösungsmittel kann dabei ausgewählt sein aus der Gruppe flüssiger aromatischer Kohlenwasserstoffe, Alkohole, Ester, Glykole, Glykolether und/oder Glykolester umfassend Butylglykol, Butylglykolacetat, Methoxypropanol, Methoxypropylacetat, Methyldipropylenglykol, Dibasic Ester, Xylol, Solvent Naphtha 100 - 200.

Die Zugabe des Lösungsmittels erfolgt dabei entweder separat als einzelner Bestandteil oder in Kombination mit einer der erfindungsgemäßen Komponenten, insbesondere mit der Polyester-Komponente. Im einfachsten Falle liegt die Polyester-Komponente gelöst in dem Lösungsmittel vor und wird mit der oben beschriebenen oligomeren Siloxan-Komponente gemischt.

Das Mischen der Siloxan- und der Polyester-Komponente erfolgt üblicherweise über einen Zeitraum von 0,3 bis 10 Stunden.

Die auf diese Weise erhaltenen Siloxan-Oligomer-Polyester-Mischungen können mindestens drei Monate lagerstabil sein.

Ebenfalls Gegenstand der vorliegenden Erfindung ist die Verwendung einer erfindungsgemäßen Zubereitung als Bindemittel in Formulierungen. Vorzugsweise handelt es sich bei den Formulierungen um jene für Metallbeschichtungen, wie z. B. beim Can- und Coil-Coating.
Diese Formulierungen können neben den erfindungsgemäßen Zubereitungen auch Hilfs- und Zusatzstoffe enthalten, insbesondere ausgewählt aus weiteren (latent) hydroxylfunktionellen Bindemitteln, wahlweise auch mit anderen, aktive Wasserstoffatome enthaltenden funktionellen Gruppen, wie z. B. Polyester, Polyether, Polyacrylate, Epoxidharze und/oder Vernetzern wie z. B. blockierte (Poly-)isocyanate, Aminoplastharze, Epoxidharze und/oder Wasser und/oder organischen Lösungsmitteln und/oder Vernetzungskatalysatoren, Pigmenten, Füllstoffen, Mattierungsmitteln, Strukturierungsmitteln, Dispergierhilfsmitteln, Verlaufshilfsmitteln, Lichtschutzmitteln Inhibitoren, Farbaufhellern, Photosensibilisatoren, Thixotropiermitteln, Hautverhinderungsmitteln, Entschäumern, Antistatika, Eindickungsmitteln, thermoplastischen Additiven, Farbstoffen, Brandschutzausrüstungen, internen Trennmitteln, Füllstoffen und/oder Treibmitteln.

Formulierungen, insbesondere Metallbeschichtungen enthaltend eine erfindungsgemäße Zubereitung, sind ebenfalls Gegenstand der vorliegenden Erfindung.

Die erfindungsgemäßen Zubereitungen können in den genannten Formulierungen mit allen üblichen Hilfs- und Zusatzstoffen kombiniert werden. Diese können zu 0 - 70 Gew.-% in den Formulierungen enthalten sein.

In den genannten Formulierungen beträgt der Siliziumgehalt 0.1 -10 Gew.-%, bezogen auf die Formulierungen.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen. Nachfolgend wird die vorliegende Erfindung anhand von Beispielen näher erläutert. Alternative Ausführungsformen der vorliegenden Erfindung sind in analoger Weise erhältlich.

### Beispiele:

### Beispiel 1: Herstellung eines anorganischen Siloxan-Oligomers:

10 g Dynasylan GLYMO (Glycidyloxypropyltrimethoxysilan der Firma Degussa GmbH) werden mit 1.14 g Wasser (1.5 mol / mol Si) und 0.2 g Borsäure (Aldrich) versetzt und bei 70 °C zwei Stunden gerührt. Anschließend wird bei 1 mbar und 70 °C der angefallene Hydrolysealkohol im Vakuum entfernt. Man erhält ein farbloses Oligomerisat, das mindestens drei Monate lagerstabil ist.

### Beispiel 2: Herstellung eines hydroxylfunktionellen Polyesters

Isophthalsäure (400 g, 2.4 mol), Terephthalsäure (328 g, 2.0 mol), 1,2-Dihydroxyethan (105 g, 1.7 mol), 2,2'-Dimethyl-1,3-dihydroxypropan (177 g, 1.7 mol) und 1,6-Hexandiol (172 g, 1.5 mol) werden in einem 2 1-Kolben mit Destillationsaufsatz im Stickstoffstrom aufgeschmolzen. Bei Erreichen einer Temperatur von 160 °C beginnt Wasser abzudestillieren. Innerhalb von einer Stunde wird die Temperatur sukzessive auf 240 °C erhöht. Nach einer weiteren Stunde bei dieser Temperatur verlangsamt sich die Wasserabspaltung. Es werden 50 mg Titantetrabutoxid eingerührt und im Vakuum weiter gearbeitet, welches im Verlauf der Reaktion so angepasst wird, dass immer noch Destillat anfällt. Nach Erreichen des gewünschten Hydroxyl- und Säurezahlbereiches wird abgestellt. Die Hydroxylzahl & die Säurezahl belaufen sich auf 20 mg KOH/g beziehungsweise 1.1 mg KOH/g. Der Polyester wird anschließend in Solvent Naphtha 150 (DHC Solvent Chemie GmbH)/ Butylglykol (3:1) zu 50 % gelöst.

### Analytische Daten

Mₙ= 5800 (GPC)
T_{g}= 33°C (DSC)

### Beispiel 3: Herstellung eines hydroxylfunktionellen Polyesters

Aus Isophthalsäure (400 g, 2.4 mol), Terephthalsäure (328 g, 2.0 mol), 1,2-Dihydroxyethan (160 g, 2.4 mol) und 2,2'-Dimethyl-1,3-dihydroxypropan (252 g, 2.4 mol) wird in Analogie zu Beispiel 2 ein Polyester erhalten mit einer Hydroxyzahl von 20 mg KOH/g und einer Säurezahl von 1 mg KOH/g. Der Polyester wird anschließend in Solvent Naphtha 150 (DHC Solvent Chemie GmbH)/ Methoxypropylacetat / Methoxypropanol (2:5:3) zu 55% gelöst.

### Analytische Daten

Mₙ= 5100 (GPC)
T_{g}= 54°C (DSC)

### Beispiel 4: Herstellung einer erfindungsgemäßen Zubereitung

51 g des Siloxan Oligomers aus Beispiel 1 werden in 300 g Polyesterlösung aus Beispiel 2 eingerührt. Die erhaltene Bindemittellösung ist klar und mindestens 3 Monate lagerstabil.

### Beispiel 5: Herstellung einer erfindungsgemäßen Zubereitung

42 g des Siloxan Oligomers aus Beispiel 1 werden in 300 g Polyesterlösung aus Beispiel 3 eingerührt. Die erhaltene Bindemittellösung ist klar und mindestens 3 Monate lagerstabil.

**Tabelle 1: Lackformulierungen A**

| | **L 1** | **V 1** | **L 2** | **V 2** | **L3** | **V3** | **L4** | **V4** |
|---|---|---|---|---|---|---|---|---|
| Bindemittel Beispiel 4 | 68,3 | | - | - | 60 | | | |
| Polyester-Lösung Beispiel 2 | - | 69,4 | - | | | 60 | | |
| Bindemittel Beispiel 5 | - | - | 72,1 | - | | | 60 | |
| Polyester-Lösung Beispiel 3 | - | - | | 73,3 | | | | 60 |
| AEROSIL 200¹ | | | | | 0,3 | 0,3 | 0,3 | 0,3 |
| Cymel 303 LF² | 9,1 | 9,0 | 11,1 | 11,3 | 6,2 | 6,2 | 6,2 | 6,2 |
| Nacure 5925³ | 0,7 | 0,7 | 0,7 | 0,7 | | | | |
| DYNAPOL 1203⁴ | | | | | 1,0 | 1,0 | 1,0 | 1,0 |
| Disparlon 1984 / 50 % in Hydrosol A200 ND⁵ | | | | | 0,3 | 0,3 | 0,3 | 0,3 |
| Hydrosol A200 ND⁵ | 6,8 | 6,9 | 7,2 | 7,3 | 10,0 | 10,0 | 10,0 | 10,0 |
| Butyldiglykol | 15,1 | 13,9 | 8,9 | 7,3 | | | | |
| Dibasic Ester⁶ | | | | | 10,7 | 10,7 | 10,7 | 10,7 |

| | | | | | | | | |
|---|---|---|---|---|---|---|---|---|
| ¹ Pyrogene Kieselsäure mit einer spez. Oberfläche von 200 m²/g, z. B. Produkt der Firma Degussa GmbH ² Melamin Harz (Hexamethoxymethylmelamin (HMMM)): z. B. Produkt der Firma Cytec Industries ³ Dodecylbenzylsulfonsäure/Isopropanol (blockierter saurer Katalysator), z. B. Produkt der Firma King Industries Inc. ⁴ kovalent blockierter Katalysator auf Sulfonsäurebasis, z. B. Produkt der Firma Degussa GmbH ⁵ flüssiges Aromatengemisch Naphthalin-frei, z. B. Produkt der Firma ExxonMobil Chemical o. e. ⁶ Lösungsmittelgenisch basierend auf Dimethylestern der Bernstein-, Pentandi- und Adipinsäure, z. B. Produkt der Firma Invista | | | | | | | | |

### Beurteilung der Beschichtungen

Die Lacke L 1, V 1, L 2 & V 2 werden mit ca. 5 bis 7 g/m² (Trockenfilmgewicht) auf Weißblech appliziert und bei 205 °C (PMT= Peak Metal Temperature) für 5 min (Ofenverweilzeit) eingebrannt. Die Vernetzung wird mittels Methyl-Ethyl-Keton (MEK) auf Vollständigkeit geprüft, dem Experten auch unter dem Begriff "MEK-Doppelhübe" geläufig (ECCA Test Method T11). Die Flexibilität wird nach DIN EN 13523-7:2001 bestimmt (T-Bend-Prüfung). Die Bleistifthärte wird nach DIN EN 13523-4:2001 bestimmt.
Als weiterer Test werden die beschichteten Bleche mit einer Stanze zu Vierkantdosen geformt. Diese Dosen werden in Wasser bei 129 °C 30 min sterilisiert. Nach der Sterilisation wird die Beschichtung hinsichtlich Haftung und Oberflächenbeschaffenheit an den vier unterschiedlichen Ecken beurteilt.

**Tabelle 2: Ergebnisse Lackausprüfung**

| | **L1** | **V1** | **L 2** | **V2** |
|---|---|---|---|---|
| MEK-Test [DH] | >100 | 36 | >100 | >100 |
| 0T Haftung R/H* | 0/0 | 4/2 | 0/0 | 3/3 |
| Bleistifthärte | 2H | H | H | F |
| Haftung nach Sterilisation** | 1/1 | 0/0 | 1/1 | 0/0 |

| | | | | |
|---|---|---|---|---|
| * R: Rissbildung, H: Haftungsverlust; 0= kein(e) Rissbildung/Haftungsverlust, 4= viel Rissbildung/Haftungsverlust ** 1 = sehr gute Haftung, 4= sehr schlechte Haftung, 0= komplette Enthaftung | | | | |

Die Lacke L3,V3,L4&V4 werden mit ca. 5 µm (Trockenschichtdicke) auf unvorbehandeltem, verzinktem Stahl (Hot dipped galvanized) appliziert und bei 224 °C (PMT= Peak Metal Temperature) für 45 s (Ofenverweilzeit) eingebrannt. Anschließend wird ein Decklack (Formulierung s. Tabelle 3) mit 20 µm (Trockenschichtdicke) appliziert und bei 232 °C (PMT) für 46 s (Ofenverweilzeit) eingebrannt. Die Vernetzung wird mittels Methyl-Ethyl-Keton (MEK) auf Vollständigkeit geprüft, dem Experten auch unter dem Begriff "MEK-Doppelhübe" geläufig (ECCA Test Method T11). Die Flexibilität wird nach DIN EN 13523-7:2001 bestimmt (T-Biegeprüfung). Die Bleistifthärte wird nach DIN EN 13523-4:2001 bestimmt. Die Korrosionsbeständigkeit der Beschichtung wird nach DIN EN ISO 4628 1 - 10 bestimmt.

**Tabelle 3: Formulierung Decklack**

| | Decklack |
|---|---|
| DYNAPOL 830-02' | 20,5 |
| DYNAPOL 838-02' | 21,5 |
| TiO₂² | 29,1 |
| Cymel 303³ | 5,5 |
| Nacure 2500⁴ | 0,4 |
| Acematt OK 500⁵ | 3,6 |
| Dibasic Ester⁶ | 9,0 |
| BYK 350⁷ | 0,5 |
| Hydrosol A200 ND⁸ | 9,9 |

| | |
|---|---|
| ¹ Kommerziell erhältliche Lösungen von linearen oder verzweigten Polyester- oder Copolyesterbindemitteln, z. B. Produkt der Firma Degussa GmbH, es können auch andere für derartige Decklackformulierungen geeignete Bindemittel sein. ² Weißpigment ³ Melamin Harz (Hexamethoxymethylmelamin (HMMM)): z. B. Produkt der Firma Cytec Industries ⁴ p-Toluolsulfonsäure/Isopropanol, z. B. Produkt der Firma King Industries Inc. oder Worlee Chemie GmbH ⁵ Mattierungsmittel, z. B. der Firma Degussa GmbH ⁶ Lösungsmittelgenisch basierend auf die Dimethylester der Bernstein-, Pentandi- und Adipinsäure, z. B. Produkt der Firma Invista ⁷ Verlaufshilfsmittel, z. B. Produkt der Firma BYK Chemie ⁸ Flüssiges Aromatengenisch Naphthalin-frei, z. B. Produkt der Firma ExxonMobil Chemical o. e. | |

**Tabelle 4: Ergebnisse Lackausprüfung**

| | **L 3** | **V 3** | **L4** | **V4** |
|---|---|---|---|---|
| MEK-Test [DH] | 100 | 70 | 100 | 100 |
| 0THaftung R/H* | 0/0 | 2/2 | 0/0 | 1/2 |
| Bleistifthärte | HB | HB | HB | HB |
| Salzsprühtest T 3,0 Biegung nach 750h | ok | starke Ablösung | ok | starke Ablösung |

| | | | | |
|---|---|---|---|---|
| * R: Rissbildung, H: Haftungsverlust; 0= kein(e) Rissbildung/Haftungsverlust, 4= viel Rissbildung/Haftungsverlust | | | | |

## Patentansprüche

1. Zubereitung mindestens umfassend mindestens eine oligomere Siloxan-Komponente und mindestens eine Polymer-Komponente,
**dadurch gekennzeichnet,**
**dass** die oligomere Siloxan-Komponente hergestellt durch kontrollierte Hydrolyse und Kondensation mindestens eines Epoxy-funktionellen Silans der allgemeinen Formel I
R¹-SiR'ₘ(OR)₃₋ₘ (I),
worin R¹ für eine Gruppe 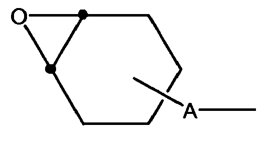 oder 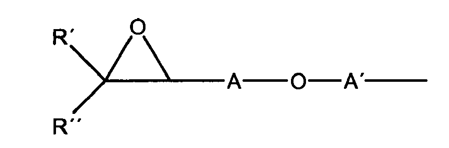 steht und die Gruppen R, R' sowie R" gleich oder verschieden sind und jeweils für einen Wasserstoff (H) oder für eine lineare, verzweigte oder cyclische, gegebenenfalls substituierte Alkylgruppe mit 1 bis 6 C-Atomen stehen, Gruppen A und A' gleich oder verschieden sind und jeweils für eine bivalente Alkylgruppe mit 1 bis 10 C-Atomen stehen, und m gleich 0 oder 1 ist, in Gegenwart von Borsäure, wobei die Polymerkomponente ein hydroxylgruppenhaltiges Polymer ist.

2. Zubereitung gemäß Anspruch 1,
**dadurch gekennzeichnet,**
**dass** bei der Hydrolyse und Kondensation zusätzlich mindestens ein weiteres organofunktionelles Silan der allgemeinen Formel II
R²-SiR'ₙ(OR)₃₋ₙ (II)
worin R² eine lineare, verzweigte oder cyclische, gegebenenfalls substituierte Alkylgruppe mit 1 bis 20 C-Atomen darstellt, R' Methyl bedeutet, Gruppen R unabhängig für einen Wasserstoff oder für eine lineare, verzweigte oder cyclische Alkylgruppe mit 1 bis 6 C-Atomen stehen und n gleich 0 oder 1 ist, anwesend ist.

3. Zubereitung gemäß Anspruch 1 oder 2,
**dadurch gekennzeichnet,**
**dass** pro Mol Alkoxyfunktion der eingesetzten Silane 0,001 bis ≤ 5 Mol Wasser eingesetzt werden, neben Borsäure als Hydrolysekatalysator und Kondensationskomponente kein weiterer Hydrolyse- bzw. Kondensationskatalysator verwendet wird und die bei der Umsetzung gebildeten Kondensate basieren auf Si-O-B und/oder Si-O-Si-Bindungen.

4. Zubereitung gemäß einem oder mehreren der Ansprüche 1 bis 3,
**dadurch gekennzeichnet,**
**dass** bei der Umsetzung pro Mol an Alkoxyfunktion der eingesetzten Silane 0,1 bis 2 Mol Wasser verwendet wird.

5. Zubereitung gemäß einem oder mehreren der Ansprüche 1 bis 4,
**dadurch gekennzeichnet,**
**dass** pro Mol eingesetztes Silan 0,001 bis 1 Mol Bor eingesetzt wird.

6. Zubereitung gemäß einem oder mehreren der Ansprüche 1 bis 5,
**dadurch gekennzeichnet,**
**dass** die Umsetzung bei einer Temperatur im Bereich von 0 bis 200 °C durchgeführt wird.

7. Zubereitung gemäß Anspruch 1,
**dadurch gekennzeichnet,**
**dass** das hydroxylgruppenhaltige Polymer ausgewählt ist aus der Gruppe umfassend Polyester, Polycarbonatpolyole oder Polyetherpolyole.

8. Zubereitung gemäß Anspruch 7,
**dadurch gekennzeichnet,**
**dass** der Polyester eine Säurezahl zwischen 0 und 10 mg KOH/g, eine Hydroxylzahl zwischen 3 und 200 mg KOH/g, eine Glasübergangstemperatur (T_{g}) zwischen -50 °C und +110 °C, eine lineare oder verzweigte Struktur, und ein Molekulargewicht (Mₙ) zwischen 800 und 25000 aufweist.

9. Zubereitung gemäß einem oder mehreren der Ansprüche 1 bis 8,
**dadurch gekennzeichnet,**
**dass** der Anteil der Polymer-Komponente in der Zubereitung 20 - 95 Gew.-%, bezogen auf die Zubereitung, beträgt.

10. Zubereitung gemäß einem oder mehreren der Ansprüche 1 bis 9,
**dadurch gekennzeichnet,**
**dass** das Epoxy-funktionelle Silan der allgemeinen Formel I Glycidyloxypropyltrimethoxy- oder ethoxysilan ist.

11. Verfahren zur Herstellung einer Zubereitung gemäß einem oder mehreren der Ansprüche 1 bis 10 umfassend das Mischen mindestens einer oligomeren Siloxan-Komponente und mindestens einer Polymer-Komponente, wobei die Polymerkomponente ein hydroxylgruppenhaltiges Polymer ist.

12. Verfahren gemäß Anspruch 11,
**dadurch gekennzeichnet,**
**dass** das Mischen bei Temperaturen von 0 bis 150 °C erfolgt.

13. Verfahren gemäß Anspruch 11 oder 12,
**dadurch gekennzeichnet,**
**dass** das Mischen in Gegenwart eines Lösungsmittels erfolgt.

14. Verwendung einer Zubereitung gemäß einem oder mehreren der Ansprüche 1 bis 10 als Bindemittel in Formulierungen.

15. Verwendung gemäß Anspruch 14,
**dadurch gekennzeichnet,**
**dass** es sich bei den Formulierungen um Metallbeschichtungen handelt.

16. Formulierungen, enthaltend eine Zubereitung gemäß einem oder mehreren der Ansprüche 1 bis 10.

## Claims

1. Preparation at least comprising at least one oligomeric siloxane component and at least one polymer component, **characterized in that** the oligomeric siloxane component is prepared by controlled hydrolysis and condensation of at least one epoxy-functional silane of the general formula I
R¹- SiR' ₘ (OR) ₃₋ₘ (I)
in which R¹ is a group 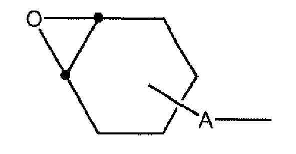 or 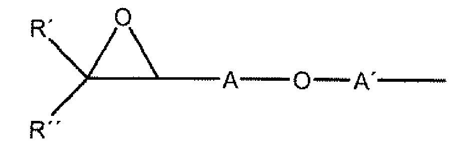 and the groups R, R' and R" are alike or different and are each a hydrogen (H) or a linear, branched or cyclic, optionally substituted alkyl group having 1 to 6 C atoms, groups A and A' are alike or different and are each a divalent alkyl group having 1 to 10 C atoms, and m is 0 or 1, in the presence of boric acid, wherein the polymer component is a hydroxyl-containing polymer.

2. Preparation according to Claim 1, **characterized in that** present additionally during the hydrolysis and condensation is at least one further organofunctional silane of the general formula II
R²-SiR'ₙ(OR)₃₋ₙ (II)
in which R² is a linear, branched or cyclic, optionally substituted alkyl group having 1 to 20 C atoms, R' is methyl, groups R independently are a hydrogen or a linear, branched or cyclic alkyl group having 1 to 6 C atoms and n is 0 or 1.

3. Preparation according to Claim 1 or 2, **characterized in that** 0.001 to ≤ 5 mol of water are used per mole of alkoxy function of the silanes employed, no further hydrolysis and condensation catalyst besides boric acid as hydrolysis catalyst and condensation component is used, and the condensates formed in the reaction are based on Si-O-B and/or Si-O-Si bonds.

4. Preparation according to one or more of Claims 1 to 3, **characterized in that** 0.1 to 2 mol of water are used in the reaction per mole of alkoxy function of the silanes employed.

5. Preparation according to one or more of Claims 1 to 4, **characterized in that** 0.001 to 1 mol of boron is used per mole of silane employed.

6. Preparation according to one or more of Claims 1 to 5, **characterized in that** the reaction is carried out at a temperature in the range from 0 to 200°C.

7. Preparation according to Claim 1, **characterized in that** the hydroxyl-containing polymer is selected from the group consisting of polyesters, polycarbonate polyols or polyether polyols.

8. Preparation according to Claim 7, **characterized in that** the polyester has an acid number between 0 and 10 mg KOH/g, a hydroxyl number between 3 and 200 mg KOH/g, a glass transition temperature (Tg) between -50°C and +110°C, a linear or branched structure, and a molecular weight (Mₙ) between 800 and 25 000.

9. Preparation according to one or more of Claims 1 to 8, **characterized in that** the fraction of the polymer component in the preparation is 20% - 95% by weight, based on the preparation.

10. Preparation according to one or more of Claims 1 to 9, **characterized in that** the epoxy-functional silane of the general formula I is glycidyloxypropyltrimethoxy- or -ethoxysilane.

11. Process for producing a preparation according to one or more of Claims 1 to 10, comprising mixing at least one oligomeric siloxane component and at least one polymer component, wherein the polymer component is a hydroxyl-containing polymer.

12. Process according to Claim 11, **characterized in that** the mixing takes place at temperatures from 0 to 150°C.

13. Process according to Claim 11 or 12, **characterized in that** the mixing takes place in the presence of a solvent.

14. Use of a preparation according to one or more of Claims 1 to 10 as a binder in a formulation.

15. Use according to Claim 14, **characterized in that** the formulation is a metal coating.

16. Formulations containing a preparation according to one or more of Claims 1 to 10.

## Revendications

1. Préparation au moins comprenant au moins un composant siloxane oligomère et au moins un composant polymère,
**caractérisée en ce que**
le composant siloxane oligomère est préparé par hydrolyse et condensation contrôlées d'au moins un silane à fonction époxy de formule générale I
R¹-SiR'ₘ(OR)₃₋ₘ (I),
dans laquelle R¹ représente un groupe 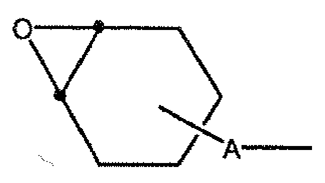 ou 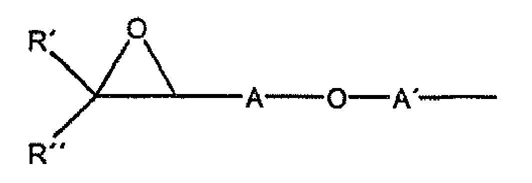 et les groupes R, R' ainsi que R" sont identiques ou différents et représentent chacun un atome d'hydrogène (H) ou un groupe alkyle linéaire, ramifié ou cyclique ayant de 1 à 6 atomes de carbone, éventuellement substitué, les groupes A et A' sont identiques ou différents et représentent chacun un groupe alkyle bivalent ayant de 1 à 10 atomes de carbone, et m est égal à 0 ou 1, en présence d'acide borique, le composant polymère étant un polymère contenant des groupes hydroxy.

2. Préparation selon la revendication 1, **caractérisée en ce que**
dans l'hydrolyse et la condensation est en outre présent au moins un autre silane organofonctionnel de formule générale II
R²-SiR'ₙ(OR)₃₋ₙ (II)
dans laquelle R² représente un groupe alkyle linéaire, ramifié ou cyclique ayant de 1 à 20 atomes de carbone, éventuellement substitué, R' représente le groupe méthyle, les groupes R représentent indépendamment un atome d'hydrogène ou un groupe alkyle linéaire, ramifié ou cyclique ayant de 1 à 6 atomes de carbone et n est égal à 0 ou 1.

3. Préparation selon la revendication 1 ou 2, **caractérisée en ce que**
par mole de fonction alcoxy des silanes utilisés on utilise de 0,001 à ≤ 5 moles d'eau, outre l'acide borique en tant que catalyseur d'hydrolyse et composant de condensation on n'utilise aucun autre catalyseur d'hydrolyse ou de condensation et les produits de condensation formés dans la réaction sont à base de liaisons Si-O-B et/ou Si-O-Si.

4. Préparation selon une ou plusieurs des revendications 1 à 3,
**caractérisée en ce que**
dans la réaction on utilise de 0, 1 à 2 moles d'eau par mole de fonction alcoxy des silanes utilisés.

5. Préparation selon une ou plusieurs des revendications 1 à 4,
**caractérisée en ce qu'**on utilise de 0,001 à 1 mole de bore par mole de silane utilisé.

6. Préparation selon une ou plusieurs des revendications 1 à 5,
**caractérisée en ce que**
la réaction est effectuée à une température dans la plage de 0 à 200 °C.

7. Préparation selon la revendication 1,
**caractérisée en ce que**
le polymère contenant des groupes hydroxy est choisi dans l'ensemble comprenant des polyesters, des polycarbonatepolyols ou des polyétherpolyols.

8. Préparation selon la revendication 7,
**caractérisée en ce que**
le polyester présente un indice d'acide compris entre 0 et 10 mg de KOH/g, un indice de groupes hydroxy compris entre 3 et 200 mg de KOH/g, une température de transition vitreuse (Tg) comprise entre -50 °C et +110 °C, une structure linéaire ou ramifiée, et une masse moléculaire (Mₙ) comprise entre 800 et 25 000.

9. Préparation selon une ou plusieurs des revendications 1 à 8,
**caractérisée en ce que**
la proportion du composant polymère dans la préparation vaut 20 - 95 % en poids, par rapport à la préparation.

10. Préparation selon une ou plusieurs des revendications 1 à 9,
**caractérisée en ce que**
le silane à fonction époxy de formule générale I est le glycidyloxypropyltriméthoxy- ou éthoxysilane.

11. Procédé pour la production d'une préparation selon un ou plusieurs des revendications 1 à 10, comprenant le mélange d'au moins un composant siloxane oligomère et d'au moins un composant polymère, le composant polymère étant un polymère contenant des groupes hydroxy.

12. Procédé selon la revendication 11,
**caractérisé en ce que**
le mélange s'effectue à des températures de 0 à 150 °C.

13. Procédé selon la revendication 11 ou 12,
**caractérisé en ce que**
le mélange s'effectue en présence d'un solvant.

14. Utilisation d'une préparation selon une ou plusieurs des revendications 1 à 10, en tant que liant dans des compositions.

15. Utilisation selon la revendication 14,
**caractérisée en ce que**
les compositions consistent en des revêtements de métaux.

16. Compositions, contenant une préparation selon une ou plusieurs des revendications 1 à 10.
